# FASCICULE DE BREVET EUROPEEN

(11) **EP 3 274 212 B1**
(45) Date de publication et mention de la délivrance du brevet: **01.05.2019**
(21) Numéro de dépôt: 16709312.9
(22) Date de dépôt: 03.03.2016
(51) Int. Cl.: B60R 22/48, B60N 2/00, B60N 2/427, B60R 21/207, B60N 2/28, B60N 2/42, B60R 21/18

(54) **SIÈGE AUTO POUR ENFANT À SYSTÈME DE DÉCLENCHEMENT DOUBLE SEUIL DE MOYENS DE PROTECTION ACTIVE**
KINDERSITZ MIT SYSTEM ZUR AUSLÖSUNG MIT DOPPELTEM GRENZWERT VON AKTIVEN SCHUTZEINRICHTUNGEN
CHILD CAR SEAT WITH SYSTEM FOR DOUBLE-THRESHOLD TRIGGERING OF ACTIVE PROTECTION MEANS

(30) Priorité: 23.03.2015 FR 1552404
(43) Date de publication de la demande: 31.01.2018
(73) Titulaire: Dorel France, 49309 Cholet Cedex (FR)
(72) Inventeur: GARNIER, Nicolas, 49230 Saint Germain Sur Moine (FR); RENAUDIN, François, 49300 Cholet (FR); QUARREY, Alexandre, 21380 Messigny et Vantoux (FR)
(74) Mandataire: Vidon Brevets & Stratégie
(86) Numéro de dépôt international: PCT/EP2016/054600
(87) Numéro de publication internationale: WO 2016/150676

(56) Documents cités:
- WO-A1-2014/064262
- FR-A1- 2 720 352
- US-A1- 2013 001 938

## Description

### 1. Domaine de l'invention

Le domaine de l'invention est celui de la puériculture, et plus précisément des sièges destinés à être installés dans un véhicule, ci-après appelés sièges auto pour enfant.

Plus précisément encore, l'invention concerne les sièges auto équipés de moyens de protection, ou de sécurité, actifs, et par exemple de coussins gonflables ("airbag"), mis en oeuvre, ou activés, dans une situation d'accident.

### 2. Art antérieur

Les sièges auto pour enfant sont conçus pour assurer une protection optimale de l'enfant en cas d'accident, autant que faire se peut quelque soit le choc subi par le véhicule.

Cette protection est généralement assurée, au moins en partie, par des éléments d'absorption dits passifs (plus précisément "passifs pendant l'accident"). Ces éléments d'absorption peuvent notamment être des éléments réalisés dans des matériaux de type polystyrène expansé (PSE), qui peuvent absorber tout ou partie du choc. Ces éléments d'absorption sont généralement en contact direct ou quasi direct avec une portion du corps de l'enfant (par exemple le dos, les épaules, la tête,...).

En complément, une protection active (plus précisément "active pendant l'accident") peut être mise en oeuvre. Ces moyens de protection active peuvent notamment être un ou plusieurs coussins gonflables, comme décrits par exemple dans le document de brevet FR2969055, au nom du Titulaire de la présente demande de brevet.

De nombreux documents décrivent de tels coussins gonflables adaptés pour sièges auto pour enfant. Cependant, il n'existe pas, à l'heure actuelle, de tels sièges sur le marché.

Ceci est probablement dû, au moins en partie, à la difficulté de mise en oeuvre de tels moyens actifs. En effet, ces moyens actifs nécessitent une détection de collision, ou de décélération, afin de déclencher à bon escient et suffisamment rapidement les systèmes permettant de protéger l'enfant.

De tels moyens de déclenchement sont, de façon générale, disponibles, dans les véhicules automobiles, pour agir sur les systèmes de sécurité adaptés aux adultes installés dans le véhicule. Le véhicule est équipé de nombreux capteurs, et de moyens de traitement puissants, capables de décider de façon efficace si des moyens de sécurité active doivent être déclenchés.

Ces moyens propres au véhicule ne peuvent cependant pas être exploités directement par un siège auto pour enfant. En effet, un siège auto pour enfant est destiné, par nature, à être installé dans différents types de véhicules. Inversement, un véhicule peut recevoir différents types de siège auto pour enfant. En l'absence d'une norme particulière, il n'est donc pas possible d'exploiter les données relevées et traitées par le véhicule.

En conséquence le système de détection de collision, de choc ou de décélération, destiné à déclencher les moyens actifs de protection d'un siège auto pour enfant doit être autonome et propre à ce dernier.

Les documents décrivant des systèmes de sécurité active, et notamment des coussins gonflables, pour siège auto prévoient généralement la présence de moyens de détection de chocs, pilotant le déclenchement des coussins gonflables, mais n'apportent aucune précision sur le fonctionnement de ces moyens, et notamment sur la façon dont les mesures sont effectuées et exploitées. Il s'agit pourtant d'un problème crucial. En effet, il est essentiel que les moyens actifs se déclenchent systématiquement lorsque ceci est nécessaire, et suffisamment rapidement pour assurer la protection de l'enfant.

Cependant, inversement, il est également important que des déclenchements intempestifs soient évités, autant que faire se peut, tant pour des raisons de sécurité (un déclenchement intempestif peut blesser l'enfant) que pour des raisons évidentes de coût (les systèmes actifs sont généralement à usage unique, et ils nécessitent un remplacement du siège, ou au moins des moyens de protection actifs, suite à un déclenchement).

D'autres difficultés liées au fait que le siège auto doit fonctionner de façon autonome doivent être prises en compte, telles que l'alimentation électrique des moyens de détection et d'actionnement. Le document WO-A-2014064262 divulgue un siège auto pour enfant équipé de moyens de détection d'une situation d'accident.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir un siège auto assurant un déclenchement fiable, sûr et efficace de moyens de protection active, lorsqu'une situation d'accident se produit.

Notamment, l'invention a pour objectif, selon au moins un mode de réalisation, de fournir un tel siège auto, évitant autant que faire se peut les déclenchements inutiles ou intempestifs, tout en garantissant une protection maximale de l'enfant transporté, en cas de besoin.

Un autre objectif de l'invention est, selon au moins un mode de réalisation, de fournir un tel siège auto, dans lequel la consommation électrique est optimisée.

L'invention a également pour objectif, selon au moins un mode de réalisation, de fournir un tel siège auto, présentant des moyens de déclenchement simple à réaliser et à mettre en oeuvre, et le cas échéant à régler, et qui soit relativement peu coûteux.

### 4. Présentation de l'invention

Pour ceci, l'invention propose un siège auto pour enfant, comprenant des moyens de détection d'une situation d'accident, activant des moyens de protection active de l'enfant en cas de besoin. Selon l'invention, lesdits moyens de détection délivrent un signal d'activation desdits moyens de protection active en fonction d'une analyse de mesures délivrées par au moins un élément de mesure d'une accélération, lesdits moyens de détection délivrant un tel signal d'activation si au moins les deux conditions suivantes sont remplies :
- ladite accélération est supérieure à un premier seuil pendant un premier intervalle de temps; et
- ladite accélération est supérieure à un second seuil pendant un second intervalle de temps,
ledit second seuil étant supérieur audit premier seuil et ledit second intervalle de temps étant inférieur audit premier intervalle de temps et inclus dans ledit premier intervalle de temps.

Ainsi, selon cet aspect de l'invention, on évite des déclenchements inutiles, voire dangereux, des moyens de protection actifs, lorsque le siège auto subit un choc bref qui n'est pas dû à une situation d'accident, par exemple un choc de type coup de pied porté sur la coque du siège auto.

Selon un mode de réalisation particulier de l'invention, ledit premier seuil est compris entre 3 g et 15 g et ledit second seuil est compris entre 5 g et 20 g (g désignant ici et dans le reste du document l'unité d'accélération correspondant approximativement à l'accélération de la pesanteur à la surface de la Terre : 1 g = 9,80665 m·s⁻²).

Selon un mode de réalisation particulier de l'invention, la durée minimale dudit premier intervalle de temps est comprise entre 3 et 20 ms et la durée minimale dudit second intervalle de temps entre 0,5 et 5 ms.

Selon un mode de réalisation particulier, lesdits moyens de détection comprennent au moins un accéléromètre électronique et un microcontrôleur.

Ainsi le microcontrôleur peut être programmé pour effectuer l'analyse d'une accélération mesurée par l'accéléromètre électronique, et délivrer ledit signal d'activation des moyens de protection actives de l'enfant en cas de détection d'une situation d'accident. Ce microcontrôleur intègre notamment des fonctionnalité de mesure du temps (ou « timer ») qui lui permettent de déterminer si le niveau d'une donnée d'accélération fourni sur l'une de ses bornes d'entrée est supérieure à un ou plusieurs seuils donnés pendant au moins un temps donné.

Selon un mode de réalisation particulier, ledit siège auto comprend des moyens d'alimentation électrique combinant au moins une batterie et au moins un condensateur agissant en complément de ladite batterie.

Ainsi, la batterie (ou pile) permet non seulement d'alimenter électriquement le circuit électronique de détection d'une situation d'accident, mais également de maintenir en charge un ou plusieurs condensateurs aptes à remplir différentes fonctionnalités (alimentation de secours, réserve d'énergie pour l'activation de fonctionnalités spécifiques, etc.).

Avantageusement, un premier condensateur est monté entre un capteur de verrouillage d'une pince Isofix® et le microcontrôleur, de façon à pallier une éventuelle microcoupure du signal délivré par ledit capteur de verrouillage qui pourrait survenir en cas de choc, et bloquer le déclenchement des moyens de protection active de l'enfant. Le condensateur fait alors office d'alimentation de secours, permettant de maintenir le circuit électronique alimenté pendant une durée suffisante pour permettre l'analyse d'une potentielle situation d'accident et le déclenchement éventuel, le cas échéant, des moyens de protection active de l'enfant.

Selon un mode de réalisation particulier, ledit siège auto comprend un deuxième condensateur, délivrant l'énergie nécessaire à l'activation d'au moins une charge pyrotechnique.

Ainsi, l'association d'une simple pile et d'un condensateur suffit à assurer la délivrance d'une alimentation électrique suffisante pour activer la charge pyrotechnique nécessaire au déploiement de moyens de protection active de type coussins gonflables (éléments de sécurité gonflables de type « airbag »), en cas de détection d'une situation d'accident.

Selon un mode de réalisation particulier, lesdits moyens de détection ne sont alimentés que si au moins une des conditions suivantes est vérifiée :
- les pinces Isofix® sont verrouillées ;
- la boucle du harnais du siège auto est fermée ;
- la présence d'un enfant dans le siège auto est détectée.

Ainsi, le risque de déclenchement intempestif (non souhaité) des moyens de protection active de l'enfant est réduit, et le dispositif est plus économe en énergie, ce qui lui assure une durée de vie importante sans changement de pile.

Selon différents modes de réalisation de l'invention, lesdits moyens de protection active comprennent au moins un des moyens appartenant au groupe comprenant :
- des éléments de sécurité gonflables ;
- des moyens pour bloquer ou augmenter la tension d'une sangle de « top tether », ou sangle anti-basculement, destinée à solidariser une partie supérieure dudit siège et un point d'ancrage dans ledit véhicule ;
- des moyens pour bloquer ou augmenter la tension des sangles de harnais dudit siège auto, destinées à maintenir un enfant dans ledit siège ;
- des moyens pour bloquer ou augmenter la tension d'une sangle de liaison entre une embase et un fauteuil mobile en rotation par rapport à ladite embase ;
- des moyens de redressement du dossier dudit siège auto ;
- des moyens de déploiement d'une bosse anti-sous-marinage ;
- des moyens pour comprimer le siège enfant sur un fauteuil ou une banquette du véhicule, au niveau des ancrages Isofix® inférieurs ;
- des moyens pour modifier l'inclinaison du siège par l'intermédiaire d'une jambe de force.

Selon un autre aspect, l'invention se rapporte également à un procédé de détection d'une situation d'accident dans un siège auto pour enfant, activant des moyens de protection active de l'enfant, délivrant un signal d'activation en fonction d'une analyse de mesures délivrées par au moins un élément de mesure d'une accélération, ledit procédé comprenant les étapes suivantes :
- obtention d'au moins une mesure d'une accélération ;
- analyse de ladite mesure, et
- délivrance d'un signal d'activation si au moins les deux conditions suivantes sont remplies :
   - ladite accélération est supérieure à un premier seuil pendant un premier intervalle de temps ; et
   - ladite accélération est supérieure à un second seuil pendant un second intervalle de temps,
ledit second seuil étant supérieur audit premier seuil et ledit second intervalle de temps étant inférieur audit premier intervalle de temps.

Selon encore un autre aspect, l'invention concerne un ou plusieurs programmes d'ordinateur comportant des instructions pour la mise en oeuvre d'un procédé détection d'une situation d'accident dans un siège auto pour enfant tel que décrit ci-dessus, lorsque ce ou ces programmes sont exécutés par un processeur.

Les différentes caractéristiques de la présente invention peuvent être mises en oeuvre sous la forme de système, dispositifs, procédés, ou supports lisibles par ordinateur. En conséquence, les différentes caractéristiques de la présente invention peuvent prendre la forme d'une réalisation entièrement matérielle (« hardware »), entièrement logicielle (« software »), ou combinant des aspects logiciels et matériels.

Par ailleurs, certaines caractéristiques de la présente invention peuvent prendre la forme d'un support de stockage lisible par ordinateur. Toute combinaison d'un ou plusieurs supports de stockage lisibles par ordinateur peut être utilisée.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre un exemple de siège auto équipé de coussins gonflables, selon un mode de réalisation particulier de l'invention ;
- la figure 2 illustre de manière schématique les deux conditions nécessaires au déclenchement des moyens de protection active (mécanisme du double seuil) selon un mode de réalisation particulier de l'invention ;
- la figure 3 présente un exemple de profil d'accélération caractéristique d'une situation d'accident, selon un mode de réalisation particulier de l'invention ;
- la figure 4 présente un exemple de schéma électrique pour la détection d'une situation d'accident et le déclenchement de moyens de protection active d'un enfant, selon un mode de réalisation particulier de l'invention ;
- la figure 5 illustre les principales étapes effectuées par le microcontrôleur, pour la mise en oeuvre du procédé de détection d'une situation d'accident, dans un mode de réalisation particulier ;
- la figure 6 décrit une architecture simplifiée d'un microcontrôleur apte à mettre en oeuvre le procédé de détection d'une situation d'accident, selon un mode de réalisation particulier de l'invention.

### 6. Description de modes de réalisation particuliers

L'invention concerne donc les sièges auto pour enfant, équipés de moyens de protection active, en conséquence de moyens de déclenchement de ces moyens de protection active en cas de besoin (choc, accident, décélération supérieure à un seuil prédéterminé, etc.).

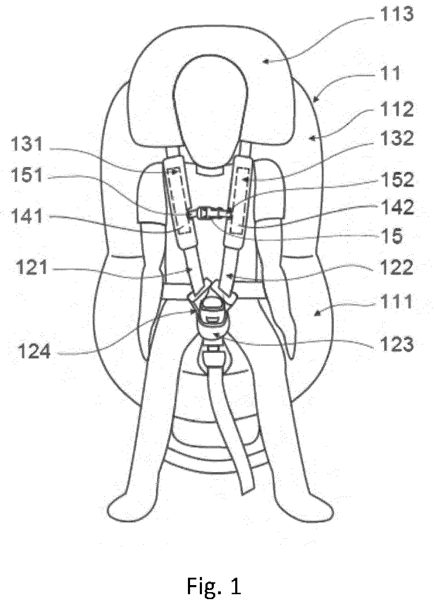

Ces diverses situations pour lesquelles un déclenchement des moyens de protection active est souhaité sont regroupées sous le terme « situation d'accident » dans l'ensemble du présent document. Les moyens de protection active peuvent par exemple comprendre au moins deux éléments de sécurité gonflables (également appelés coussins gonflables) apte à se gonfler en cas de détection d'une situation d'accident, et des moyens de solidarisation desdits éléments de sécurité gonflables les uns avec les autres. Cette solution mettant en oeuvre deux coussins gonflables solidarisables est présentée en relation avec la **figure 1****,** et est décrite en détail par le document de brevet FR2969055 déjà mentionné.

Dans un mode de réalisation, ce siège auto comprend un harnais 12 présentant deux bretelles 121, 122 destinées à s'étendre à partir des épaules le long du torse d'un enfant, et portant chacune un élément de sécurité gonflable 141, 142, logé dans un fourreau 131, 132 monté respectivement sur les bretelles 121, 122, et apte à se gonfler en cas de détection d'une situation d'accident. Alternativement, ces éléments de sécurité gonflables peuvent également être portés directement par les bretelles 121, 122.

Ces éléments de sécurité gonflables 141 et 142 sont par ailleurs reliés par des moyens de solidarisation 15, les solidarisant l'un à l'autre, lorsque l'enfant est installé dans le siège.

Ces éléments de solidarisation 15 comprennent, dans le mode de réalisation illustré, deux portions souples, ou lanières, 151 et 152, équipées chacune d'un élément de boucle respectivement mâle et femelle, pouvant s'insérer l'un dans l'autre pour solidariser les deux lanières 151 et 152, et pouvant être séparées l'un de l'autre, par une action manuelle appropriée (choisie de façon que l'enfant installé ne puisse pas désolidariser lui-même ces moyens de solidarisation).

Selon ce mode de réalisation, les moyens de solidarisation 15 assurent également le maintien dans une position suffisamment rapprochée des deux bretelles 121 et 122, lorsqu'un enfant est installé dans le siège (fonction « chest clip » en anglais). Ceci permet de garantir que les bretelles sont bien placées, et d'éviter que l'enfant passe un bras sous une des bretelles et/ou retire l'une des bretelles alors que le harnais est bouclé.

Selon un autre mode de réalisation, ces éléments de sécurité gonflables ne sont pas nécessairement systématiquement solidarisés l'un à l'autre quand un enfant est installé dans le siège auto, mais uniquement lorsqu'une situation d'accident est détectée. Dans ce cas, les moyens de solidarisation sont contrôlés par le même signal d'activation que celui qui déclenche le gonflage des éléments de sécurité gonflables, de sorte qu'une solidarisation automatique des éléments de sécurité gonflables soit mise en oeuvre avant ou pendant le gonflage.

La forme des coussins gonflables et/ou la manière dont ils sont gonflés peuvent par exemple être adaptées de sorte que les moyens de solidarisation soient dirigés les uns vers les autres lors du gonflage, et aptes à se solidariser sans qu'une intervention humaine soit requise.

Dans encore un autre mode de réalisation, les coussins gonflables ne sont pas nécessairement portés par les bretelles ou leurs fourreaux, mais sont portés par le dossier ou la têtière du siège auto, à proximité de la tête de l'enfant. Là encore, des moyens de solidarisation des coussins gonflables sont prévus, afin d'empêcher que ces coussins ne s'écartent les uns des autres, en particulier lorsque la tête d'un enfant entre à leur contact.

Ces éléments de sécurité, ou coussins, gonflables doivent être gonflés rapidement, en cas d'accident, pour assurer la protection de l'enfant. Il est cependant important d'éviter qu'un déclenchement intempestif des coussins gonflables soit déclenché, en particulier lorsque le siège n'est pas installé convenablement dans le véhicule et/ou qu'aucun enfant n'est présent dans le siège auto. A ce titre, le document de brevet FR2997352, au nom du Titulaire de la présente demande de brevet, décrit des moyens de déclenchement, qui sont avantageusement intégralement portés par le siège auto, et qui tiennent compte d'au moins deux informations distinctes :
- au moins un premier signal indiquant un usage réel et/ou correct du siège dans le véhicule ; et
- au moins un second signal, délivré par des moyens de détection, indiquant la détection d'une situation d'accident.

La première série de signaux a pour but d'éviter un déclenchement des moyens de protection actifs, même en présence d'un choc ou d'un accident, si ceci n'est pas nécessaire, ou dangereux.

Ainsi, il est souhaitable d'éviter les déclenchements lorsque le siège auto n'est pas installé dans un véhicule (par exemple lors de son transport ou de son stockage). Il n'est également pas souhaitable que les moyens de protection actifs se déclenchent si le siège auto n'est pas installé correctement, et par exemple maintenus par ses pinces Isofix®. Un premier capteur de bon verrouillage, ou de bonne installation du siège dans le véhicule (par exemple un capteur associé aux pinces Isofix®) est prévu, pour délivrer une information d'accrochage correct de celle-ci aux anneaux prévus à cet effet dans le véhicule. Il est ainsi à noter que l'équipement produisant le premier signal comprend selon l'invention au moins un capteur de verrouillage du siège auto au véhicule, ce capteur étant de préférence porté par le siège auto.

Il est par ailleurs souhaitable que les moyens de protection actifs ne se déclenchent pas, même si le siège auto est correctement installé dans le véhicule, si celui-ci ne transporte pas d'enfant.

Selon une première approche, cette détection peut être assurée par des moyens de contrôle du verrouillage du harnais de l'enfant dans le siège auto, et par exemple du bouclage correct du clip de thorax, reliant les deux bretelles du harnais. Cette approche est notamment intéressante dans le cas du siège de la figure 1, puisque ce clip doit également être verrouillé, dans un mode de réalisation, pour assurer un déploiement correct des coussins gonflables.

D'autres capteurs de présence de l'enfant peuvent être prévus, en alternative ou en complément, par exemple à l'aide d'un capteur de poids intégré à l'assise du siège auto.

Il convient ensuite de détecter de façon efficace une situation d'accident. Ceci est assuré par la détection d'un ou plusieurs seuils de décélération prédéterminés, délivrant des premiers signaux de détection. Le document de brevet FR2997352 précité propose plusieurs approches pour atteindre cet objectif.

Selon une première approche, ces moyens de détection peuvent être purement mécaniques. Cette approche présente l'avantage de ne pas nécessiter d'alimentation électrique, ce qui permet de simplifier la réalisation du siège auto, et d'éviter les risques dus à la nécessité d'un fonctionnement en autonomie (qui suppose la mise en oeuvre de batteries autonomes, et le contrôle de la charge suffisante de cette dernière, pour générer une alerte dans le cas contraire).Un tel système mécanique peut notamment mettre en oeuvre un ressort taré, associé à une masselotte mobile, formant un capteur inertiel. Lorsque la masselotte se déplace au-delà d'un seuil choisi, la tension du ressort dépasse également un seuil correspondant, et un signal de détection est généré. D'autres modes de réalisation permettant d'obtenir un résultat similaire sont bien sûr utilisables.

Un inconvénient de cette approche est qu'elle ne permet pas de réglage sélectif: un seul tarage du ressort est possible. Par sécurité, on est donc conduit à limiter le seuil prédéterminé, ce qui augmente le risque de déclenchement intempestif.

Selon une deuxième approche, il est possible d'utiliser des moyens électroniques de détection, mettant en oeuvre un ou plusieurs accéléromètres. Cette approche permet d'effectuer une détection plus précise, et en conséquence de disposer d'un seuil de déclenchement programmable, en fonction de divers paramètres. En conséquence, on peut ainsi réduire le risque de déclenchement intempestif.

En revanche, ce système doit être en veille en permanence, ce qui suppose une alimentation en énergie électrique suffisante pour que le siège puisse être utilisé pendant plusieurs mois/années.

Selon une troisième approche, le document de brevet FR2997352 précité prévoit de combiner les deux premières approches décrites ci-dessus, en confiant aux moyens mécaniques une fonction de réveil, ou d'activation, des moyens électroniques en cas de situation d'accident potentiel. Dès qu'ils sont activés, les moyens électroniques effectuent une analyse plus poussée, et plus précise, de la situation, pour décider si la situation d'accident potentiel est ou non une situation d'accident réel, nécessitant le déclenchement des moyens de protection actifs.

En d'autres termes, les moyens mécaniques réagissent à un seuil de réveil relativement bas, englobant un nombre de situation ne nécessitant pas le déclenchement des moyens de protection actifs. Dès que le seuil de réveil est franchi les moyens mécaniques réveillent les moyens électroniques, qui analysent la situation, et décident du déclenchement, si l'accélération dépasse un seuil de déclenchement. Cette troisième approche est particulièrement efficace, puisque la consommation électrique est fortement réduite (les moyens électroniques n'étant alimentés que lorsqu'ils sont « réveillés » par les moyens mécaniques), et que toutes les situations « à risque », ou « d'accident potentiel », sont détectées grâce au seuil de réveil. Celui-ci peut être bas, puisqu'il ne pilote pas directement le déclenchement des moyens de protection. La mise en oeuvre des moyens électroniques, en complément, valident la situation « d'accident réel », nécessitant le déclenchement des moyens de protection, ou décident qu'il s'agit d'une « fausse alerte », en fonction d'une analyse fine de mesures délivrées par un ou plusieurs accéléromètres électroniques, et le cas échéant de différents paramètres permettant d'adapter le second seuil, ou seuil de déclenchement.

On s'intéresse dans la présente demande à la fonctionnalité d'analyse fine des mesures délivrées par au moins un élément de mesure d'une accélération, par exemple un ou plusieurs accéléromètres électroniques.

Après différents essais statiques et dynamiques, les inventeurs ont mis en évidence le fait que la détection d'un pic d'accélération seul ne constituait pas un critère suffisamment fiable pour valider une situation d'accident « réelle » et donc décider du déclenchement des moyens de protection actives. En effet, à titre d'exemple, ils ont mesuré qu'un coup de talon d'adulte dans un siège auto génère au niveau du siège un pic d'accélération bref (de l'ordre de 2,5 ms) mais important (accélération supérieure à 8 g). Aussi, avec une analyse basée sur la comparaison d'une accélération avec un simple seuil, un tel choc serait susceptible de déclencher les moyens de protection active de manière non souhaitée, avec toute les conséquences indésirables associées (déclenchement intempestif susceptible de blesser l'enfant, coûts associés au remplacement des moyens de protection active qui sont généralement à usage unique, etc.).

Ainsi, si la détection d'un pic d'accélération s'avère une condition nécessaire dans le processus de détection d'une situation d'accident, elle n'est pas suffisante et son implémentation seule pourrait conduire au déclenchement intempestif des moyens de protection active (on parle également de «faux positif» pour caractériser de tels cas de déclenchement intempestif).

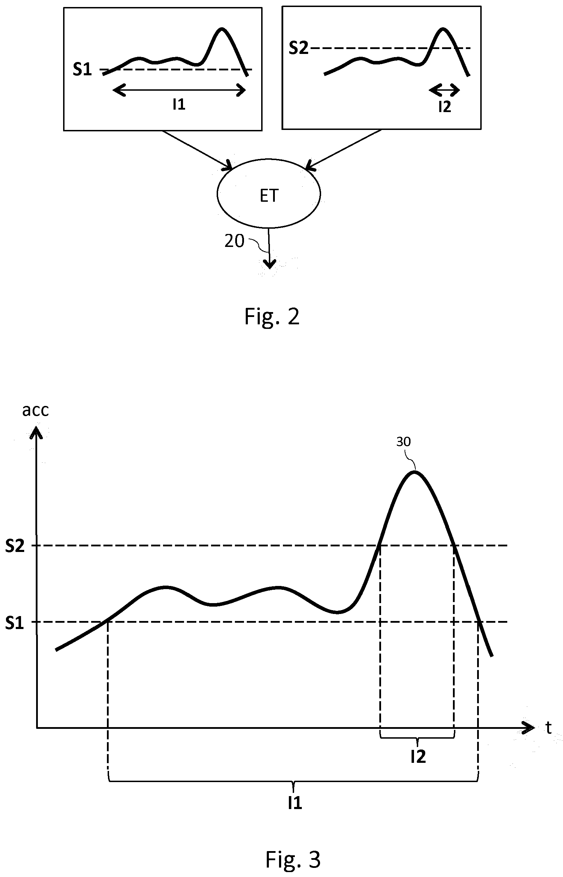

Pour pallier ce problème, l'invention propose un système de déclenchement à double seuil des moyens de protection active. Selon la technique proposée, le signal d'activation (20) des moyens de protection active n'est délivré que si au moins les deux conditions suivantes, présentées schématiquement en relation avec la **figure 2****,** sont vérifiées :
- l'accélération est supérieure à un premier seuil (S1) pendant un premier intervalle de temps (I1) ; et
- l'accélération est supérieure à un second seuil (S2) pendant un second intervalle de temps (I2).

Selon la technique proposée, le second seuil d'accélération est supérieur au premier seuil, et le second intervalle de temps est de durée inférieure à celle du premier intervalle de temps, et est inclus dans ledit premier intervalle de temps.

En d'autres termes, la détection d'une situation d'accident se base non seulement sur la présence de ce qui peut être assimilé à un pic d'accélération (une accélération supérieure au second seuil pendant le second intervalle de temps), mais également sur la détection d'une accélération moindre mais de plus longue durée (une accélération supérieure au premier seuil - ledit premier seuil étant inférieur au second - pendant un premier intervalle de temps englobant le second).

La **figure 3** illustre un exemple de profil d'accélération d'un siège auto qui satisfait aux conditions de déclenchement des moyens de protection active de l'enfant qui y est installé, selon la technique proposée. En effet, un pic d'accélération (30) est détecté (accélération supérieure au seuil S2 pendant l'intervalle de temps I2), mais également une accélération moindre mais néanmoins anormalement élevée (supérieure au seuil S1, ledit seuil S1 étant inférieur au seuil S2) pendant un intervalle de temps I1 supérieur à I2, et qui contient I2.

Les essais statiques et dynamiques réalisés par les inventeurs ont permis de caractériser les valeurs des seuils et la durée des intervalles de sorte d'optimiser la détection de situation d'accidents : le seuil S1 est ainsi idéalement compris entre 3 g et 15 g (par exemple 7 g), et le seuil S2 entre 5 g et 20 g (par exemple 15 g) ; l'intervalle de temps Il associé au seuil S1 a une durée minimale comprise entre 3 ms et 20 ms (par exemple 10 ms), et l'intervalle I2 associé au seuil S2 une durée minimale comprise entre 0,5 ms et 5 ms (par exemple 3 ms). Avec les valeurs données en exemple précédemment, une situation d'accident est donc détectée lorsqu'un siège auto subit une accélération supérieure à 7 g pendant au moins 10 ms, et que durant cette plage d'accélération supérieure à 7 g d'au moins 10 ms il subit également une accélération supérieure à 15 g pendant au moins 3 ms.

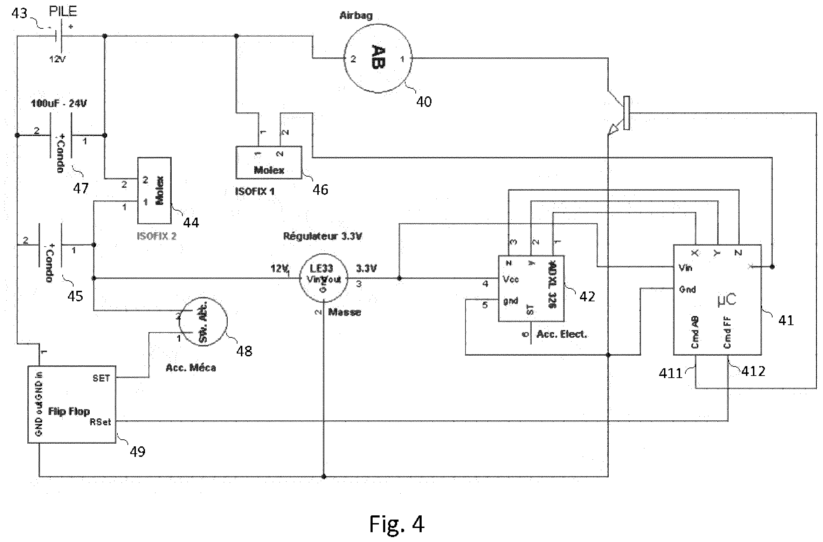

On présente, en relation avec la **figure 4**, un exemple de circuit électronique apte à mettre en oeuvre la présente invention. Dans le mode de réalisation particulier proposé ici, le siège auto est installé dans le véhicule au moyen de deux pinces Isofix® (Isofix® 1 et Isofix® 2), et des coussins gonflables font office de moyens de protection active de l'enfant. Le gonflage de ces coussins est déclenché par l'activation de charges pyrotechniques associées (40). Un microcontrôleur (41) est utilisé pour analyser les mesures d'accélération du siège auto, lesdites mesures étant fournies par un accéléromètre électronique (42). Une pile (43) est utilisée pour alimenter les différents composants du circuit.

Afin d'éviter tout déclenchement du système si le siège auto n'est pas installé dans le véhicule, ou s'il n'est pas installée correctement, une des pinces Isofix® (ici Isofix® 2) est dotée d'un capteur de verrouillage (44) monté entre la pile (43) et le reste du circuit. Ce capteur de verrouillage (44) agit comme un interrupteur qui ne laisse passer le courant que si la pince Isofix® est correctement arrimée à son point d'ancrage : ainsi, l'électronique globale n'est alimentée en courant que si la pince Isofix® 2 est verrouillée. Afin de pallier une éventuellement microcoupure du signal délivré par un tel capteur de verrouillage qui pourrait survenir en situation d'accident, un premier condensateur (45) est monté entre ce capteur de verrouillage (44) et le reste du circuit électronique. Il est maintenu en charge par la pile (43) tant que le capteur de verrouillage (44) détecte que la pince Isofix® 2 est correctement arrimée à son point d'ancrage. Dans le cas contraire, il prend le relais sur la pile (43) de sorte de maintenir l'alimentation du circuit électronique pendant une durée suffisante pour permettre l'analyse d'une potentielle situation d'accident et le déclenchement éventuel, le cas échéant, des moyens de protection active de l'enfant (par exemple 100 ms).

L'autre pince Isofix® (Isofix® 1) est également dotée d'un capteur de verrouillage (46) similaire monté entre la pile (43) et une entrée du microcontrôleur (41). De cette manière, lorsqu'il est alimenté, le microcontrôleur (41) est en mesure de vérifier que la seconde pince Isofix® est correctement arrimée sur son point ancrage, par simple contrôle de la tension appliquée sur une de ses bornes d'entrées. Dans le cas contraire, le microcontrôleur (41) ne délivrera pas de signal d'activation des moyens de protection active de l'enfant.

Ainsi, les moyens de protection active ne peuvent se déclencher que si les deux pinces Isofix® sont verrouillées, autrement dit lorsque le siège auto est correctement installé dans un véhicule.

Lorsque les deux pinces Isofix® sont verrouillées (c'est à dire correctement arrimées à leur point d'ancrage), le microcontrôleur (41) analyse les mesures d'accélération du siège auto fournies par l'accéléromètre électronique (42). Au moyen d'un algorithme spécifique, il détermine si les conditions de la technique proposées sont vérifiées, à savoir la détection d'une accélération supérieure à un premier seuil pendant un premier intervalle de temps et supérieure à un second seuil pendant un second intervalle de temps (le second seuil étant supérieur au premier seuil, et le second intervalle de temps étant de durée inférieure à celle du premier intervalle de temps, et inclus dans ledit premier intervalle de temps). Si c'est le cas, alors on considère qu'on est en situation d'accident et le microcontrôleur (41) délivre un signal d'activation des moyens de protection active de l'enfant sur sa sortie (411).

Dans le cas du présent exemple, des coussins gonflables font office de moyens de protection active de l'enfant. La pile utilisée pour alimenter le système électronique en énergie est généralement insuffisante pour assurer l'activation de la charge pyrotechnique nécessaire à la libération du gaz qui va gonfler coussins en cas d'accident. Aussi, cette pile est associée à un deuxième condensateur (47) qu'elle maintient en charge. C'est ce deuxième condensateur (47) qui est chargé de fournir l'énergie nécessaire à activer la charge pyrotechnique (40) utilisée pour le gonflage des coussins en cas de détection d'une situation d'accident.

Afin de maitriser les besoins en énergie du système et garantir ainsi une durée de vie de plusieurs années sans changement de pile (typiquement au moins dix ans), le circuit électronique proposé embarque également les composants nécessaires à la mise en oeuvre de la technique proposée dans la troisième approche document de brevet FR2997352 précité, à savoir un accéléromètre mécanique (48) et une bascule (ou boitier « flip-flop » en anglais) (49). Lorsque l'accéléromètre mécanique détecte une accélération supérieure à un seuil prédéterminé relativement bas (inférieur aux seuils S1 et S2 de la présente invention), il délivre un signal sur la borne d'entrée « set » de la bascule (49), laquelle va alors permettre l'alimentation du reste du circuit, et en particulier celle de l'accéléromètre électronique (42) et du microcontrôleur (41) (on parle alors de « réveil » du système électronique). Une fois le système électronique réveillé, le microcontrôleur (41) procède à l'analyse des mesures d'accélération fournies par l'accéléromètre électronique (42) afin de déterminer si une situation d'accident est détectée. Si c'est le cas, il délivre le signal d'activation des moyens de protection active de l'enfant sur sa sortie (411). Dans le cas contraire, il délivre un signal d'extinction sur sa sortie (412), à destination de la bascule, qui se charge alors de couper l'alimentation et ainsi éteindre le système.

Il apparaitra bien entendu clairement à l'homme du métier que ce circuit électronique présenté en relation avec la figure 4 est un exemple donné à titre purement illustratif et non limitatif pour la mise en oeuvre de l'invention : outre ce mode de réalisation particulier, de nombreux autres circuits électroniques différents de celui décrit ici sont susceptibles de remplir le même rôle.

En complément ou alternativement aux capteurs de verrouillage des pinces Isofix®, d'autres capteurs peuvent être utilisés pour couper l'alimentation des moyens de détection d'une situation d'accident, et ainsi éviter leur déclenchement intempestif tout en optimisant les besoins en énergie du système. On peut citer, à titre illustratif mais non limitatif de tels capteurs, un capteur de verrouillage du harnais du siège auto, ou encore un capteur de poids apte à détecter si un enfant est effectivement installé dans le siège auto.

Pour assurer la sécurité de l'enfant, la détection doit être effectuée très rapidement et la commande de déclenchement doit être émise de préférence entre 3 et 80 millisecondes après le choc. Les tests effectués montrent que la combinaison de moyens mécaniques et électroniques permet d'atteindre ce résultat.

Pour obtenir une détection rapide, et précise, de la décélération correspondant à un choc, les moyens de détection sont préférablement placés au plus près possible des points d'ancrages du véhicule (anneaux Isofix®), car ce sont ces éléments qui reçoivent en premier la décélération due à la collision. Ainsi, les moyens de détection peuvent être placés dans l'embase, au voisinage des pinces Isofix®, voire en tout ou en partie directement sur ou dans ces pinces Isofix®.

Plus généralement, une pluralité de capteurs (par exemple des accéléromètres) et/ou de fusibles peuvent être installés sur le siège auto son embase et/ou une jambe de force associée, et contribuer ainsi à permettre d'affiner l'analyse d'une situation potentielle d'accident afin de déterminer si les moyens de protection active de l'enfant doivent être déclenchés. Des capteurs spécifiques peuvent également être utilisés pour déterminer si l'impact est frontal ou latéral.

Dans d'autres modes de réalisation particuliers de l'invention, des signaux fournis par le véhicule dans lequel le siège auto est installé sont utilisés pour améliorer l'analyse d'une situation potentielle d'accident, ou pour contrôler directement la mise en oeuvre des moyens de protection active de l'enfant. En effet, de nombreux véhicules comprennent des moyens de protection active de leurs occupants (tels que des airbags), et disposent en conséquence de moyens propres de détection d'une situation d'accident. Les signaux correspondants peuvent alors être transmis du véhicule vers le siège auto, afin que ce dernier les utilise pour déclencher ses propres moyens de protection active de l'enfant.

Bien que le mode de réalisation décrit en relation avec la figure 1 présente le déclenchement de coussins gonflables, l'approche de l'invention peut bien sur être mis en oeuvre, en complément ou en alternative, pour assurer le déclenchement d'autres types de moyens de protection actifs, tels que :
- des moyens pour bloquer ou augmenter la tension d'une sangle de « top tether », ou sangle anti-basculement, destinée à solidariser la partie supérieure dudit siège et un point d'ancrage dans le véhicule ;
- des moyens pour bloquer ou augmenter la tension des sangles de harnais dudit siège auto, destinées à maintenir un enfant dans le siège ;
- des moyens pour bloquer ou augmenter la tension d'une sangle de liaison entre une embase et un fauteuil mobile en rotation par rapport à l'embase ;
- des moyens de redressement du dossier du siège auto ;
- des moyens de déploiement d'une bosse anti-sous-marinage ;
- des moyens pour comprimer le siège enfant sur une banquette du véhicule au niveau des ancrages Isofix® inférieurs ;
- des moyens pour modifier l'inclinaison du siège par l'intermédiaire d'une jambe de force.

Selon un autre aspect de l'invention, le siège auto comprend des moyens indicateurs, précisant si les moyens de protection actifs ont été déclenchés et/ou empêchant l'utilisation dudit siège auto si lesdits moyens de protection actifs ont été déclenchés.

Ceci permet de repérer, et/ou de rendre inutilisable, un siège auto ayant subi un déclenchement de moyens de protection actifs. En effet, la plupart des moyens de protection actifs sont à usage unique, et le siège auto ne doit ensuite plus être utilisé, ou à tout le moins être contrôlé et/ou réparé.

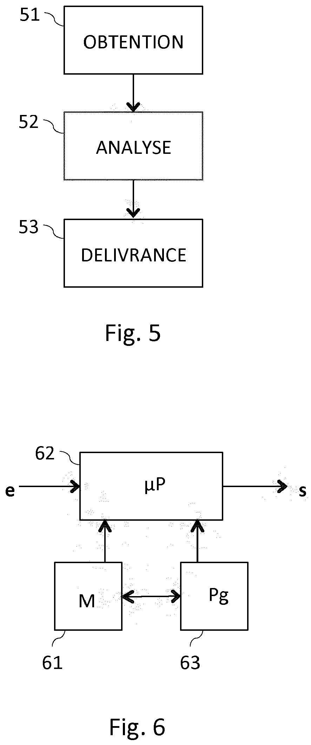

Selon un autre aspect, l'invention se rapporte également à un procédé de détection d'une situation d'accident dans un siège auto pour enfant, activant des moyens de protection active de l'enfant, délivrant un signal d'activation en fonction d'une analyse de mesures délivrées par au moins un élément de mesure d'une accélération, ledit procédé étant caractérisé en ce qu'il comprend les étapes suivantes, en relation avec la **figure 5** :
- obtention (51) d'au moins une mesure d'une accélération ;
- analyse (52) de ladite mesure, et
- délivrance (53) d'un signal d'activation si au moins les deux conditions suivantes sont remplies :
   - ladite accélération est supérieure à un premier seuil pendant un premier intervalle de temps ; et
   - ladite accélération est supérieure à un second seuil pendant un second intervalle de temps,
ledit second seuil étant supérieur audit premier seuil et ledit second intervalle de temps étant inférieur audit premier intervalle de temps.

Ce procédé est par exemple mis en oeuvre au sein d'un microcontrôleur, dont une architecture simplifiée est proposée en relation avec la **figure 6**. Un tel microcontrôleur comprend une mémoire (61) constituée d'une mémoire tampon, une unité de traitement (62), équipée par exemple d'un processeur, et pilotée par le programme d'ordinateur (63), mettant en oeuvre le procédé de détection d'une situation d'accident selon l'invention. À l'initialisation, les instructions de code du programme d'ordinateur (63) sont par exemple chargées dans une mémoire avant d'être exécutées par le processeur de l'unité de traitement (62). L'unité de traitement (62) reçoit en entrée (e) des mesures effectuées par au moins un accéléromètre. Le microprocesseur de l'unité de traitement (62) réalise alors les étapes du procédé de détection d'une situation d'accident selon l'invention, selon les instructions du programme d'ordinateur (63) pour délivrer en sortie (s) ou bien un signal d'activation des moyens de protection active de l'enfant (si une situation d'accident est détectée), ou bien un signal d'extinction de l'électronique (dans le cas contraire).

## Revendications

1. Siège auto pour enfant, équipé de moyens de détection d'une situation d'accident, activant des moyens de protection active de l'enfant, délivrant un signal d'activation en fonction de mesures délivrées par au moins un accéléromètre,
**caractérisé en ce que** lesdits moyens de détection comprennent des moyens d'analyse desdites mesures, délivrant un tel signal d'activation si au moins les deux conditions suivantes sont remplies :
- l'accélération est supérieure à un premier seuil (S1) pendant un premier intervalle de temps (I1) ; et
- l'accélération est supérieure à un second seuil (S2) pendant un second intervalle de temps (I2),
ledit second seuil (S2) étant supérieur audit premier seuil (S1) et ledit second intervalle de temps (I2) étant inférieur audit premier intervalle de temps (I1) et inclus dans ledit premier intervalle de temps (I1).

2. Siège auto selon la revendication 1, **caractérisé en ce que** ledit premier seuil est compris entre 3 g et 15 g et ledit second seuil est compris entre 5 g et 20 g.

3. Siège auto selon l'une quelconque des revendications 1 et 2, **caractérisé en ce que** la durée minimale dudit premier intervalle de temps est comprise entre 3 et 20 ms et la durée minimale dudit second intervalle de temps entre 0,5 et 5 ms.

4. Siège auto selon l'une quelconque des revendications 1 à 3, **caractérisé en ce que** lesdits moyens de détection comprennent au moins un accéléromètre électronique et un microcontrôleur.

5. Siège auto selon l'une quelconque des revendications 1 à 4, **caractérisé en ce qu'**il comprend des moyens d'alimentation électrique combinant au moins une batterie et au moins un condensateur agissant en complément de ladite batterie.

6. Siège auto selon la revendication 5, **caractérisé en ce qu'**il comprend un premier condensateur monté entre un capteur de verrouillage d'une pince Isofix® et ledit microcontrôleur, de façon à pallier une éventuelle microcoupure du signal délivré par ledit capteur de verrouillage.

7. Siège auto selon l'une quelconque des revendications 5 et 6, **caractérisé en ce qu'**il comprend un deuxième condensateur, délivrant l'énergie nécessaire à l'activation d'au moins une charge pyrotechnique.

8. Siège auto selon l'une quelconque des revendications 1 à 7, **caractérisé en ce que** lesdits moyens de détection ne sont alimentés que si au moins une des conditions suivantes est vérifiée :
- les pinces Isofix® sont verrouillées ;
- la boucle du harnais du siège auto est fermée ;
- la présence d'un enfant dans le siège auto est détectée.

9. Siège auto selon l'une quelconque des revendications 1 à 8, **caractérisé en ce que** lesdits moyens de protection active comprennent au moins un des éléments appartenant au groupe comprenant :
- des éléments de sécurité gonflables ;
- des moyens pour bloquer ou augmenter la tension d'une sangle de « top tether », ou sangle anti-basculement, destinée à solidariser une partie supérieure dudit siège et un point d'ancrage dans ledit véhicule ;
- des moyens pour bloquer ou augmenter la tension des sangles de harnais dudit siège auto, destinées à maintenir un enfant dans ledit siège ;
- des moyens pour bloquer ou augmenter la tension d'une sangle de liaison entre une embase et un fauteuil mobile en rotation par rapport à ladite embase ;
- des moyens de redressement du dossier dudit siège auto ;
- des moyens de déploiement d'une bosse anti-sous-marinage ;
- des moyens pour comprimer le siège enfant sur un fauteuil ou une banquette du véhicule, au niveau des ancrages Isofix® inférieurs;
- des moyens pour modifier l'inclinaison du siège par l'intermédiaire d'une jambe de force.

10. Procédé de détection d'une situation d'accident dans un siège auto pour enfant, activant des moyens de protection active de l'enfant, **caractérisé en ce qu'**il comprend les étapes suivantes :
- obtention de mesures d'une accélération ;
- analyse desdites mesures, et
- délivrance d'un signal d'activation si au moins les deux conditions suivantes sont remplies :
- l'accélération est supérieure à un premier seuil pendant un premier intervalle de temps ; et
- l'accélération est supérieure à un second seuil pendant un second intervalle de temps,
ledit second seuil étant supérieur audit premier seuil et ledit second intervalle de temps étant inférieur audit premier intervalle de temps.

11. Programme d'ordinateur comportant des instructions pour la mise en oeuvre du procédé selon la revendication 10 lorsque ce programme est exécuté par un processeur.

12. Support d'informations, inamovible, ou partiellement ou totalement amovible, lisible par un ordinateur, et comportant des instructions d'un programme d'ordinateur pour l'exécution des étapes du procédé selon la revendication 10.

## Patentansprüche

1. Autositz für Kinder, ausgestattet mit Mitteln zum Erkennen einer Unfallsituation, die Mittel zum aktiven Schutz des Kindes betätigen und ein Aktivierungssignal in Abhängigkeit der durch mindestens einen Beschleunigungsmesser gelieferten Messungen abgeben,
**dadurch gekennzeichnet, dass** die Mittel zum Erkennen Analysemittel für die Messungen enthalten, wobei die Mittel zum Erkennen ein derartiges Aktivierungssignal abgeben, wenn mindestens die zwei folgenden Bedingungen erfüllt sind:
- die Beschleunigung ist größer als ein erster Grenzwert (S1) während eines ersten Zeitintervalls (I1); und
- die Beschleunigung ist größer als ein zweiter Grenzwert (S2) während eines zweiten Zeitintervalls (I2),
wobei der zweite Grenzwert (S2) größer als der erste Grenzwert (S1) ist und das zweite Zeitintervall (I2) kleiner als das erste Zeitintervall (I1) und in dem ersten Zeitintervall (I1) enthalten ist.

2. Autositz nach Anspruch 1, **dadurch gekennzeichnet, dass** der erste Grenzwert im Bereich zwischen 3 g und 15 g und der zweite Grenzwert im Bereich zwischen 5 g und 20 g liegt.

3. Autositz nach einem der Ansprüche 1 und 2, **dadurch gekennzeichnet, dass** die minimale Dauer des ersten Zeitintervalls im Bereich zwischen 3 und 20 ms und die minimale Dauer des zweiten Zeitintervalls zwischen 0,5 und 5 ms liegt.

4. Autositz nach einem der Ansprüche 1 bis 3, **dadurch gekennzeichnet, dass** die Mittel zum Erkennen mindestens einen elektronischen Beschleunigungsmesser und einen Mikrocontroller enthalten.

5. Autositz nach einem der Ansprüche 1 bis 4, **dadurch gekennzeichnet, dass** er elektrische Stromversorgungsmittel enthält, die mindestens eine Batterie und mindestens einen Kondensator, der ergänzend zu der Batterie wirkt, kombinieren.

6. Autositz nach Anspruch 5, **dadurch gekennzeichnet, dass** er einen ersten Kondensator enthält, der zwischen einem Verriegelungssensor einer Isofix®-Zange und dem Mikrocontroller eingebaut ist, um eine eventuelle Mikroausschaltung des durch den Verriegelungssensor gelieferten Signals auszugleichen.

7. Autositz nach einem der Ansprüche 5 und 6, **dadurch gekennzeichnet, dass** er einen zweiten Kondensator enthält, der die notwendige Energie zur Aktivierung mindestens einer pyrotechnischen Ladung liefert.

8. Autositz nach einem der Ansprüche 1 bis 7, **dadurch gekennzeichnet, dass** die Mittel zum Erkennen nur versorgt sind, wenn mindestens eine der folgenden Bedingungen verifiziert ist:
- die Isofix®-Zangen sind verriegelt;
- die Schnalle des Gurts des Autositzes ist verschlossen;
- die Anwesenheit eines Kindes im Autositz wird festgestellt.

9. Autositz nach einem der Ansprüche 1 bis 8, **dadurch gekennzeichnet, dass** die aktiven Schutzmittel mindestens eines der Elemente enthalten, die zu der Gruppe gehören, die enthält:
- aufblasbare Sicherheitselemente;
- Mittel zum Blockieren oder zum Erhöhen der Spannung eines "top tether"-Bands, oder eines Anti-Kippbands, das dazu bestimmt ist, einen oberen Teil des Sitzes und einen Ankerpunkt in dem Fahrzeug fest zu verbinden;
- Mittel zum Blockieren oder zum Erhöhen der Spannung von Gurtbändern des Autositzes, die dazu bestimmt sind, ein Kind im Sitz zu halten;
- Mittel zum Blockieren oder zum Erhöhen der Spannung eines Verbindungsbands zwischen einem Unterteil und einem Sitz, der gegenüber dem Unterteil drehbeweglich ist;
- Mittel zur Aufrichtung der Rückenstütze des Autositzes;
- Mittel zur Ausbildung einer Erhebung zur Verhinderung eines Abtauchens;
- Mittel zum Komprimieren des Kindersitzes auf einem Fahrzeugsitz oder einer Fahrzeugsitzbank, auf Höhe der unteren Isofix®-Anker;
- Mittel zum Ändern der Sitzneigung mittels einer Schubstange.

10. Verfahren zum Erkennen einer Unfallsituation in einem Autositz für Kinder, das Mittel für den aktiven Schutz des Kindes betätigt, **dadurch gekennzeichnet, dass** es die folgenden Schritte enthält:
- Erhalten von Messungen einer Beschleunigung;
- Analysieren der Messungen und
- Auslösen eines Aktivierungssignals, wenn mindestens die zwei folgenden Bedingungen erfüllt sind:
- die Beschleunigung ist größer als ein erster Grenzwert während eines ersten Zeitintervalls; und
- die Beschleunigung ist größer als ein zweiter Grenzwert während eines zweiten Zeitintervalls,
wobei der zweite Grenzwert größer als der erste Grenzwert ist und das zweite Zeitintervall kleiner als das erste Zeitintervall ist.

11. Computerprogramm, das Anweisungen für die Durchführung des Verfahrens nach Anspruch 10 enthält, wenn dieses Programm durch einen Prozessor ausgeführt wird.

12. Datenträger, nicht auswechselbar, oder teilweise oder vollständig auswechselbar, der durch einen Computer lesbar ist, und Anweisungen eines Computerprogramms zur Ausführung der Schritte des Verfahren nach Anspruch 10 enthält.

## Claims

1. Child car seat, provided with means for detecting an accident situation, activating active means of protection of the child, delivering an activation signal according to measurements delivered by at least one accelerometer,
**characterised in that** said means for detecting comprise means for analysing said measurements, delivering such an activation signal if at least the following two conditions are satisfied:
- the acceleration is greater than a first threshold (S1) during a first interval of time (I1); and
- the acceleration is greater than a second threshold (S2) during a second interval of time (12),
said second threshold (S2) being greater than said first threshold (S1) and said second interval of time (12) being less than said first interval of time (I1) and included in said first interval of time (I1).

2. Car seat according to claim 1, **characterised in that** said first threshold is between 3 g and 15 g and said second threshold is between 5 g and 20 g.

3. Car seat according to any of claims 1 and 2, **characterised in that** the minimum duration of said first interval of time is between 3 and 20 ms and the minimum duration of said second interval of time is between 0.5 and 5 ms.

4. Car seat according to any of claims 1 to 3, **characterised in that** said means for detecting comprise at least one electronic accelerometer and a microcontroller.

5. Car seat according to any of claims 1 to 4, **characterised in that** it comprises means of electrical power combining at least one battery and at least one capacitor acting as a supplement of said battery.

6. Car seat according to claim 5, **characterised in that** it comprises a first capacitor mounted between a locking sensor of an Isofix® clip and said microcontroller, in such a way as to overcome a possible micro-interruption of the signal delivered by said locking sensor.

7. Car seat according to any of claims 5 and 6, **characterised in that** it comprises a second capacitor, delivering the power required for the activation of at least one pyrotechnic charge.

8. Car seat according to any of claims 1 to 7, **characterised in that** said means for detecting are powered only if at least one of the following conditions is satisfied:
- the Isofix® clips are locked;
- the buckle of the harness of the car seat is closed;
- the presence of a child in the car seat is detected.

9. Car seat according to any of claims 1 to 8, **characterised in that** said active means of protection comprise at least one of the elements belonging to the group comprising:
- inflatable safety elements;
- means for blocking or increasing the tension of a "top tether" strap, or anti-tilt strap, intended to attach the upper portion of said seat and an anchoring point in the vehicle;
- means for blocking or increasing the tension of the harness straps of said car seat, intended to maintain a child in the seat;
- means for blocking or increasing the tension of a liaison strap between a base and a mobile seat in rotation in relation to said base;
- means for rectifying the seat back of said car seat;
- means for deploying an anti-submarining device;
- means for compressing the child seat on a seat or a bench seat of the vehicle, on lower Isofix® anchorings;
- means for modifying the inclination of the seat by the intermediary of a supporting leg.

10. Method for detecting an accident situation in a child car seat, activating active means of protection of the child, **characterised in that** it comprises the following steps:
- obtaining of measurements of an acceleration;
- analysis of said measurements, and
- delivery of an activation signal if at least the two following conditions are satisfied:
-- the acceleration is greater than a first threshold during a first interval of time; and
-- the acceleration is greater than a second threshold during a second interval of time,
said second threshold being greater than said first threshold and said second interval of time being less than said first interval of time.

11. Computer program comprising instructions for the implementation of the method according to claim 10 when this program is executed by a processor.

12. Support for information, non-removable, or partially or entirely removable, that can be read by a computer, and comprising instructions of a computer program for the execution of the steps of the method according to claim 10.
